# EUROPÄISCHE PATENTSCHRIFT

(11) **EP 3 310 616 B1**
(45) Veröffentlichungstag und Bekanntmachung des Hinweises auf die Patenterteilung: **19.02.2020**
(21) Anmeldenummer: 16732921.8
(22) Anmeldetag: 08.06.2016
(51) Int. Cl.: B60Q 1/068, B60Q 1/076

(54) **FAHRZEUGSCHEINWERFER MIT EINSTELLBAREN OPTISCHEN BAUEINHEITEN**
VEHICLE HEADLAMP WITH ADJUSTABLE OPTICAL MODULES
PHARE DE VÉHICULE AVEC DES MODULES OPTIQUES AJUSTABLES

(30) Priorität: 19.06.2015 AT 505162015
(43) Veröffentlichungstag der Anmeldung: 25.04.2018
(73) Patentinhaber: ZKW Group GmbH, 3250 Wieselburg (AT)
(72) Erfinder: LEONHARTSBERGER, Rudolf, 3393 Zelking (AT); JANDL, Peter, 3321 Ardagger Markt (AT); HAHN, Maximilian, 3250 Wieselburg/Erlauf (AT)
(74) Vertreter: Patentanwaltskanzlei Matschnig & Forsthuber OG
(86) Internationale Anmeldenummer: PCT/AT2016/050186
(87) Internationale Veröffentlichungsnummer: WO 2016/201466

(56) Entgegenhaltungen:
- EP-A1- 2 112 021
- EP-A1- 2 881 283
- EP-A2- 2 679 444
- EP-A2- 2 719 579
- DE-A1- 10 211 816
- DE-A1-102006 049 302
- US-A1- 2015 117 042

## Beschreibung

Die Erfindung betrifft einen Fahrzeugscheinwerfer mit einem Gehäuse sowie mit zumindest zwei optisch relevanten Baueinheiten, wobei jede optisch relevante Baueinheit in einem eigenen Tragelement befestigt ist und jedes Tragelement in Bezug zum Gehäuse jeweils um eine Horizontalachse sowie jeweils um eine Vertikalachse verschwenkbar gelagert ist, wobei zum Verschwenken der Tragelemente um deren Horizontalachsen eine Horizontalachsen-Verschwenkeinrichtung vorgesehen ist, welche Horizontalachsen-Verschwenkeinrichtung mittels einer Horizontalachsen-Koppelvorrichtung mit zumindest zwei jeweils um deren Horizontalachsen verschwenkbaren Tragelementen beweglich verbunden ist, und wobei zum Verschwenken der Tragelemente um deren Vertikalachsen eine Vertikalachsen-Verschwenkeinrichtung vorgesehen ist, welche Vertikalachsen-Verschwenkeinrichtung gegebenenfalls mittels einer um eine Koppelvorrichtungs-Vertikalachse in Bezug zum Gehäuse drehbar gelagerten Vertikalachsen-Koppelvorrichtung mit zumindest zwei jeweils um deren Vertikalachsen verschwenkbaren Tragelementen gekoppelt ist.

Im Rahmen der vorliegenden Anmeldung wird unter einer optisch relevanten Baueinheit beispielsweise ein einzelnes Lichtmodul oder eine Lichtmodul-Einheit mit mehreren Lichtmodulen verstanden. Üblicherweise ist eine Lichtmodul-Einheit eine Baueinheit von mehreren Lichtmodulen, die gemeinsam verstellt werden können, indem die eine Einheit bildenden einzelnen Lichtmodule beispielsweise starr auf einem gemeinsamen Träger befestigt oder anderweitig miteinander verbunden sind. Mit einem Lichtmodul kann eine bestimmte Lichtverteilung, etwa eine Fernlichtverteilung, eine abgeblendete Lichtverteilung wie beispielsweise ein Abblendlicht, oder eine Nebellichtverteilung erzeugt werden, oder ein Lichtmodul trägt als Bauteil im Rahmen einer Lichtmodul-Einheit zur Erzeugung einer solchen Lichtverteilung bei.

Bei einem zuvor genannten optisch relevanten Bauteil eines Lichtmoduls oder einer Lichtmodul-Einheit, welches Einfluss auf die mit dem Lichtmodul bzw. mit der Lichtmodul-Einheit erzeugte Lichtverteilung hat, kann es sich beispielsweise um einen Reflektor, eine Linse, eine Blende, eine Lichtquelle bzw. eine Lichtquellen-Anordnung oder um andere Licht formende Mittel, wie beispielsweise Lichtleiter und/oder Lichtleitkörper handeln.

Bekanntlich ist es für Fahrzeugscheinwerfer erforderlich bzw. gesetzlich vorgeschrieben, dass das von dem Scheinwerfer erzeugte Lichtbündel in vertikaler und/oder in horizontaler Richtung entsprechend einer vorgegebenen Grundeinstellung eingestellt werden kann. Wenn der Fahrzeugscheinwerfer ein oder mehrere Lichtmodule oder Lichtmodul-Einheiten umfasst, so ist üblicherweise vorgesehen, dass diese Lichtmodule oder relevante Bauteile dieser Lichtmodule, welche auf eine Ausrichtung bzw. Justierung des ausgesendeten Lichtbündels Einfluss haben, wie beispielsweise Linsen oder Reflektoren, auch entsprechend den gesetzlichen Vorgaben oder den entsprechenden Kundenvorgaben eingestellt werden können. Üblicherweise erfolgt die Einstellung der Lichtmodule, der Lichtmodul-Einheiten bzw. deren Bauteilen durch Verschwenken um Achsen, typischerweise um horizontale und/oder um vertikale Achsen. Im Weiteren ist der Einfachheit halber nur noch von einem Einstellen von Lichtmodulen die Rede. Im Rahmen der Anmeldung ist darunter jedoch zu verstehen, dass damit auch lediglich einzelne Bestandteile solcher Lichtmodule gemeint sein können.

Umfasst der Fahrzeugscheinwerfer zwei oder mehr Lichtmodule, so ist es in der Regel günstig, wenn diese Lichtmodule auf einem gemeinsamen Tragrahmen befestigt sind, welcher gemeinsame Tragrahmen mit entsprechenden Einstelleinrichtungen um eine horizontale und/oder um eine vertikale Achse verschwenkt werden kann. Auf diese Weise können mit einer einzigen Einstelleinrichtung zwei oder mehr Lichtmodule in einer Richtung eingestellt werden, bzw. können mit zwei Einstelleinrichtungen die Lichtmodule in vertikaler sowie in horizontaler Richtung eingestellt werden.

Fahrzeugscheinwerfer, bei welchen mehrere Lichtmodule um vertikale Achsen verschwenkbar sind, sind beispielsweise bereits aus der US 2008/0247182 A1, der WO 2013/032637 A1 und der DE 102 38 792 A1 bekannt. Ein weiteres bewegbares Lichtmodul ist in EP 2 679 444 A2 offenbart.

Bestimmte Ausführungsfomen von modernem Fahrzeug-Design können allerdings zunehmend eine Anordnung der Lichtmodule mit einer "Pfeilung" innerhalb des Fahrzeugscheinwerfers erfordern. Unter dem Begriff der Pfeilung versteht man, dass in der Regel der oder die jeweils außen liegenden Lichtmodule eines Scheinwerfers im Vergleich zu den jeweils weiter innen angeordneten Lichtmodulen entgegen der Fahrtrichtung des Fahrzeugs nach hinten versetzt sind. Der Winkel zwischen einer Vertikalebene, welche durch zwei Lichtmodule eines Scheinwerfers verläuft, und einer Vertikalebene normal auf die Fahrtrichtung wird dabei als Pfeilungswinkel bezeichnet. Bei heutigen Fahrzeugen werden bereits Pfeilungswinkel der Lichtmodule zueinander von rund 45° realisiert.

Mit zunehmendem Pfeilungswinkel wird es allerdings schwieriger bzw. teilweise unmöglich, zwei oder mehr Lichtmodule - beispielsweise ein Lichtmodul für Abblendlicht und ein Lichtmodul für Fernlicht - auf einem gemeinsamen Tragrahmen anzuordnen, da es auf Grund der großen Pfeilung und des großen Abstandes vom Drehpunkt des Tragrahmens zu sehr großen Auslenkungen beim Verschwenken der Lichtmodule kommen würde.

Für derartige Scheinwerfergeometrien ist es daher notwendig, jedes Lichtmodul bzw. jede Lichtmodul-Einheit für sich separat einstellbar zu gestalten, beispielsweise indem jedes Lichtmodul auf einem eigenen Tragrahmen angeordnet ist, welcher Tragrahmen um eine horizontale und/oder um eine vertikale Achse verschwenkbar ist. Entsprechend wird auch für jedes Lichtmodul und für jede Verschwenkachse eine eigene Einstelleinrichtung benötigt, was sowohl in der Herstellung als auch in der Wartung aufwendig ist.

Aus der Druckschrift AT 514402 A1 ist dazu bereits ein Fahrzeugscheinwerfer bekannt, bei dem mehrere optisch relevante Baueinheiten, wie etwa Lichtmodule oder Lichtmodul-Einheiten, gemeinsam mit lediglich einer Einstelleinrichtung pro Verstellrichtung eingestellt werden können. Die Lichtmodul-Einheiten sind dabei unter einem Pfeilungswinkel versetzt nebeneinander in einer gemeinsamen horizontalen Scheinwerferebene angeordnet und gemeinsam um eine vertikale Drehachse verschwenkbar befestigt. Nachteilig an dieser Ausführung ist jedoch der hohe Platzbedarf des Fahrzeugscheinwerfers insbesondere bei komplexen Beleuchtungsaufgaben, wenn also nebeneinander mehrere Lichtmodul-Einheiten erforderlich sind. Weiters sind aufgrund der durch den Pfeilungswinkel bedingten großen Abstände zwischen den einzelnen Lichtmodul-Einheiten auch die zur gemeinsamen Justierung der Lichtmodul-Einheiten erforderlichen Hebelarme groß, weshalb es zwangsläufig bei der Justierung zu einer großen Auslenkung der verschwenkten Lichtmodule kommt. Nachteilig führen diese langen Hebelarme des Verschwenkmechanismus bei Erschütterungen während des Fahrbetriebs zu einer unerwünscht hohen Krafteinwirkung in die Tragrahmen der Lichtmodule.

Es ist somit Aufgabe der Erfindung, einen Fahrzeugscheinwerfer zu schaffen, bei dem die aus dem Stand der Technik bekannten Nachteile überwunden werden und bei dem mehrere Lichtmodul-Einheiten besonders kompakt derart angeordnet sind, dass die Auslenkungen der verschwenkten Lichtmodule reduziert und die Krafteinwirkung auf den Verschwenkmechanismus bei Erschütterungen gesenkt wird.

Diese Aufgabe wird mit einem eingangs erwähnten Fahrzeugscheinwerfer dadurch gelöst, dass erfindungsgemäß die Tragelemente zumindest in zwei in vertikaler Richtung voneinander beabstandeten Scheinwerferebenen angeordnet sind, wobei die Horizontalachsen-Koppelvorrichtung mit zumindest zwei Tragelementen beweglich verbunden sowie um eine Koppelvorrichtungs-Horizontalachse in Bezug zum Gehäuse drehbar gelagert ist.

Unter dem Begriff einer Scheinwerferebene wird im Rahmen der vorliegenden Anmeldung eine im Wesentlichen horizontale Ebene verstanden, die an einer im Wesentlichen horizontalen Konturlinie einer optisch relevanten Baueinheit bzw. an einer im Wesentlichen horizontalen Konturlinie eines Tragelements festgelegt wird. Bei einem erfindungsgemäßen Fahrzeugscheinwerfer sind die Lichtmodul-Einheiten zumindest in zwei unterschiedlichen Scheinwerferebenen, die voneinander in vertikaler Richtung beabstandet sind, angeordnet. Die Lichtmodul-Einheiten können dabei in zwei oder mehreren in vertikaler Richtung beabstandeten Scheinwerferebenen vertikal direkt übereinander und/oder seitlich zueinander versetzt angeordnet sein. Insbesondere für diejenigen Ausführungen, bei denen zwei, drei oder noch mehr Tragelemente samt den zugehörigen Lichtmodul-Einheiten matrixartig übereinander sowie seitlich zueinander versetzt angeordnet sind, werden mit der Erfindung die eingangs genannten Nachteile von mit einer Pfeilung innerhalb eines Fahrzeugscheinwerfers angeordneten Lichtmodulen überwunden. Da bei mehreren mit Pfeilung in einer Scheinwerferebene nebeneinander angeordneten Lichtmodulen auch aus Platzgründen rasch ein Maximum erreicht wird - beispielsweise können drei oder vier nebeneinander angeordnete Lichtmodul-Einheiten bereits zu breit sein, um diese gemeinsam in einem Fahrzeugscheinwerfer unterzubringen - werden vorteilhaft bei einem erfindungsgemäßen Fahrzeugscheinwerfer die Lichtmodule in mehreren Scheinwerferebenen übereinander angeordnet.

Vorteilhaft können bei einem erfindungsgemäßen Fahrzeugscheinwerfer somit mehrere optisch relevante Baueinheiten, beispielsweise mehrere Lichtmodul-Einheiten, besonders kompakt in zwei oder mehreren voneinander in vertikaler Richtung beabstandeten Scheinwerferebenen angeordnet werden. Durch die kompakte Anordnung der Baueinheiten übereinander verringern sich auch die Auslenkbewegungen der verschwenkten Lichtmodule und auch die Krafteinwirkung auf den Verschwenkmechanismus bei Erschütterungen wird durch die verkürzten Abstände der Koppelvorrichtungen zu den einzelnen optisch relevanten Baueinheiten gesenkt.

In einer weiteren vorteilhaften Ausführung der Erfindung kann bei einem Fahrzeugscheinwerfer die Horizontalachsen-Koppelvorrichtung mit zumindest zwei Tragelementen, welche in zumindest zwei voneinander in vertikaler Richtung beabstandeten Scheinwerferebenen angeordnet sind, direkt beweglich verbunden sein. In dieser Variante der Erfindung dient die Horizontalachsen-Koppelvorrichtung zur direkten Verbindung von in zumindest zwei übereinanderliegenden Scheinwerferebenen angeordneten Tragelementen. Somit können die in den Tragelementen befestigten Lichtmodule unabhängig von ihrer Anordnung in den unterschiedlichen Scheinwerferebenen von ein und derselben Horizontalachsen-Koppelvorrichtung gemeinsam in ihrer Leuchtweiteneinstellung reguliert werden.

Es kann weiters bei einem erfindungsgemäßen Fahrzeugscheinwerfer von Vorteil sein, wenn die Horizontalachsen-Koppelvorrichtung mit zumindest zwei Tragelementen direkt beweglich verbunden ist und mit zumindest einem weiteren Tragelement mittels eines Koppelelements indirekt verbunden ist. In dieser Variante der Erfindung können beispielsweise die in zwei oder mehreren Scheinwerferebenen direkt übereinander angeordneten Tragelemente mit der Horizontalachsen-Koppelvorrichtung direkt miteinander verbunden sein und Tragelemente, die in einem Pfeilungswinkel dazu seitlich versetzt in einer oder mehreren Scheinwerferebenen angeordnet sind, sind mit einem oder mit mehreren Koppelelementen indirekt mit der Horizontalachsen-Koppelvorrichtung verbunden.

In einer weiteren zweckmäßigen Ausführung können bei einem erfindungsgemäßen Fahrzeugscheinwerfer zumindest drei optisch relevante Baueinheiten vorgesehen sein, wobei zumindest zwei optisch relevante Baueinheiten mit ihren Tragelementen nebeneinander in einer ersten Scheinwerferebene angeordnet sind und zumindest eine weitere optisch relevante Baueinheit mit ihrem Tragelement in einer in vertikaler Richtung von der ersten Scheinwerferebene beabstandeten weiteren Scheinwerferebene angeordnet ist. In dieser Ausführungsform sind zumindest drei optisch relevante Baueinheiten matrixartig in mehreren vertikal voneinander beabstandeten Scheinwerferebenen angeordnet.

Zweckmäßig kann bei einem erfindungsgemäßen Fahrzeugscheinwerfer jedes Tragelement jeweils mit drei Lagerpunkten in dem Gehäuse gelagert sein, wobei ein erster Horizontal-Lagerpunkt und ein zweiter Fix-Lagerpunkt jeweils Lagerungen um die jeweilige Horizontalachse bilden und der zweite Fix-Lagerpunkt und ein dritter Vertikal-Lagerpunkt jeweils Lagerungen um die jeweilige Vertikalachse der Tragelemente bilden. Vorteilhaft bilden die drei Lagerpunkte jedes Tragelements ein stabiles Lagerungsdreieck, wobei jeweils zwei der drei Lagerpunkte die Lagerungen um die Horizontal- bzw. Vertikalachse bilden. Das Lagerungsdreieck wird auch als Verstelldreieck bezeichnet.

Besonders vorteilhaft kann bei einem Fahrzeugscheinwerfer gemäß der Erfindung der zweite Fix-Lagerpunkt jedes Tragelementes jeweils in Bezug zum Gehäuse ortsfest sein. In dieser Ausführung der Erfindung dient der Fix-Lagerpunkt als ortsfestes Lager in Bezug zum Gehäuse, wodurch die Lage des Tragelements in Bezug zum Gehäuse festgelegt ist. Über den Fix-Lagerpunkt, durch welchen sowohl die Horizontalachse als auch die Vertikalachse des jeweiligen Tragelements verlaufen und sich dort schneiden, ist das Tragelement gelenkig mit dem Gehäuse bzw. an einem in Bezug auf das Gehäuse feststehenden Bauteil, beispielsweise einer Grundplatte, gelenkig gelagert. Der Fix-Lagerpunkt ist somit in Bezug auf das Gehäuse nicht verschieblich, Verschwenkbewegungen des Tragelementes um diesen Fix-Lagerpunkt in horizontaler sowie in vertikaler Richtung sind aber möglich.

In einer bevorzugten Ausführung der Erfindung kann bei einem Fahrzeugscheinwerfer die Horizontalachsen-Verschwenkeinrichtung an der Horizontalachsen-Koppelvorrichtung angreifen, vorzugsweise direkt angreifen. In dieser Ausführung sind die Horizontalachsen-Verschwenkeinrichtung und die Horizontalachsen-Koppelvorrichtung vorzugsweise direkt miteinander gekoppelt.

Vorteilhaft kann in einer weiteren Ausführungsvariante der Erfindung bei einem Fahrzeugscheinwerfer die Vertikalachsen-Verschwenkeinrichtung an der Vertikalachsen-Koppelvorrichtung angreifen, vorzugsweise direkt angreifen. In dieser Ausführung sind die Vertikalachsen-Verschwenkeinrichtung und die Vertikalachsen-Koppelvorrichtung vorzugsweise direkt miteinander gekoppelt.

Besonders zweckmäßig kann es sein, wenn bei einem erfindungsgemäßen Fahrzeugscheinwerfer die um eine Koppelvorrichtungs-Vertikalachse drehbar gelagerte Vertikalachsen-Koppelvorrichtung an allen verschwenkbaren Tragelementen, vorzugsweise direkt, angreift.

Vorteilhaft verbindet bei einem Fahrzeugscheinwerfer gemäß der Erfindung die Vertikalachsen-Koppelvorrichtung die Tragelemente direkt miteinander. In einer weiteren vorteilhaften Ausführung ist bei einem Fahrzeugscheinwerfer die Vertikalachsen-Koppelvorrichtung mit den verschwenkbaren Tragelementen jeweils in deren Horizontal-Lagerpunkten vorzugsweise gelenkig verbunden.

In einer besonders kompakten Ausführung der Erfindung verbindet die Horizontalachsen-Koppelvorrichtung zumindest zwei Tragrahmen direkt miteinander.

In einer weiteren vorteilhaften Variante der Erfindung ist bei einem Fahrzeugscheinwerfer die Horizontalachsen-Koppelvorrichtung mit allen Tragelementen direkt und/oder indirekt beweglich verbunden.

Zweckmäßig ist bei einem erfindungsgemäßen Fahrzeugscheinwerfer die Horizontalachsen-Koppelvorrichtung mit den verschwenkbaren Tragelementen jeweils in deren Vertikal-Lagerpunkten vorzugsweise gelenkig verbunden.

Besonders kompakt ist ein erfindungsgemäßer Fahrzeugscheinwerfer, wenn die Koppelvorrichtungs-Horizontalachse zwischen zwei in vertikaler Richtung voneinander beabstandeten Scheinwerferebenen angeordnet ist. In dieser Ausführung der Erfindung ist die Koppelvorrichtungs-Horizontalachse in vertikaler Richtung zwischen zwei voneinander beabstandeten Scheinwerferebenen und damit zwischen zwei übereinander angeordneten Tragelementen angeordnet. Die Lagerung der Horizontalachsen-Koppelvorrichtung um diese Koppelvorrichtungs-Horizontalachse ermöglicht somit kurze Abstände zu den miteinander verbundenen Tragelementen, wodurch ebenfalls die Auslenkungen der verschwenkten Lichtmodule reduziert und die Krafteinwirkung auf den Verschwenkmechanismus der Leuchtweitenregulierung bei Erschütterungen gesenkt werden.

Vorteilhaft ist bei einem Fahrzeugscheinwerfer gemäß der Erfindung die Koppelvorrichtungs-Horizontalachse im Wesentlichen mittig der Horizontalachsen-Koppelvorrichtung angeordnet. In dieser besonders kompakten Ausführung befindet sich die Lagerung der Horizontalachsen-Koppelvorrichtung um die Koppelvorrichtungs-Horizontalachse, welche die horizontale Drehachse der Horizontalachsen-Koppelvorrichtung bildet, etwa mittig zwischen den in vertikaler Richtung voneinander beabstandeten Scheinwerferebenen bzw. den dort befindlichen Tragelementen, wodurch die Auslenkungen der verschwenkten Lichtmodule weiter reduziert und die Krafteinwirkung auf den Verschwenkmechanismus bei Erschütterungen weiter gesenkt werden.

In einer weiteren vorteilhaften Ausführungsvariante der Erfindung ist bei einem Fahrzeugscheinwerfer die Koppelvorrichtungs-Vertikalachse im Wesentlichen mittig der Vertikalachsen-Koppelvorrichtung angeordnet. Die Koppelvorrichtungs-Vertikalachse bildet die vertikale Drehachse der Vertikalachsen-Koppelvorrichtung. Durch deren Anordnung im Wesentlichen mittig der Vertikalachsen-Koppelvorrichtung können die Auslenkungen der verschwenkten Lichtmodule reduziert und die Krafteinwirkung auf den Verschwenkmechanismus der Leuchtenhorizontaleinstellung bei Erschütterungen gesenkt werden.

Besonders zweckmäßig sind bei einem erfindungsgemäßen Fahrzeugscheinwerfer mit der Horizontalachsen-Koppelvorrichtung alle Tragelemente jeweils um deren Horizontalachsen synchron verschwenkbar. Vorteilhaft können in dieser Ausführung sämtliche Tragelemente unabhängig von deren Anordnung in den mehreren Scheinwerferebenen mit der Horizontalachsen-Koppelvorrichtung gleichzeitig und synchron um deren Horizontalachsen verschwenkt werden.

Von Vorteil ist bei einem Fahrzeugscheinwerfer gemäß der Erfindung, dass mit der Vertikalachsen-Koppelvorrichtung alle Tragelemente jeweils um deren Vertikalachsen synchron verschwenkbar sind. Vorteilhaft können in dieser Ausführung sämtliche Tragelemente unabhängig von deren Anordnung in den mehreren Scheinwerferebenen mit der Vertikalachsen-Koppelvorrichtung gleichzeitig und synchron um deren Vertikalachsen verschwenkt werden.

In einer Weiterbildung der Erfindung ist bzw. sind bei einem Fahrzeugscheinwerfer die Horizontalachsen-Koppelvorrichtung und/oder die Vertikalachsen-Koppelvorrichtung als einstückiges Koppelelement ausgebildet.

Außerdem wird im Rahmen der Erfindung ein Fahrzeug angegeben, welches zumindest einen Fahrzeugscheinwerfer gemäß der Erfindung umfasst.

Weitere Einzelheiten, Merkmale und Vorteile der Erfindung ergeben sich aus der nachfolgenden Erläuterung von in den Zeichnungen schematisch dargestellten Ausführungsbeispielen. In den Zeichnungen zeigen:
- Fig. 1 in einer isometrischen Ansicht schräg von vorne eine erste Ausführungsform eines geöffneten, erfindungsgemäßen Fahrzeugscheinwerfers;
- Fig. 2 und Fig. 3 jeweils in einer Draufsicht die in Fig. 1 veranschaulichte Ausführung eines Fahrzeugscheinwerfers;
- Fig. 4 und Fig. 5 jeweils in einer Ansicht von der Seite die in Fig. 1 veranschaulichte Ausführung eines Fahrzeugscheinwerfers; sowie
- Fig. 6 in einer Frontalansicht von vorne eine zweite Ausführungsform eines erfindungsgemäßen Fahrzeugscheinwerfers innerhalb eines Scheinwerfergehäuses.

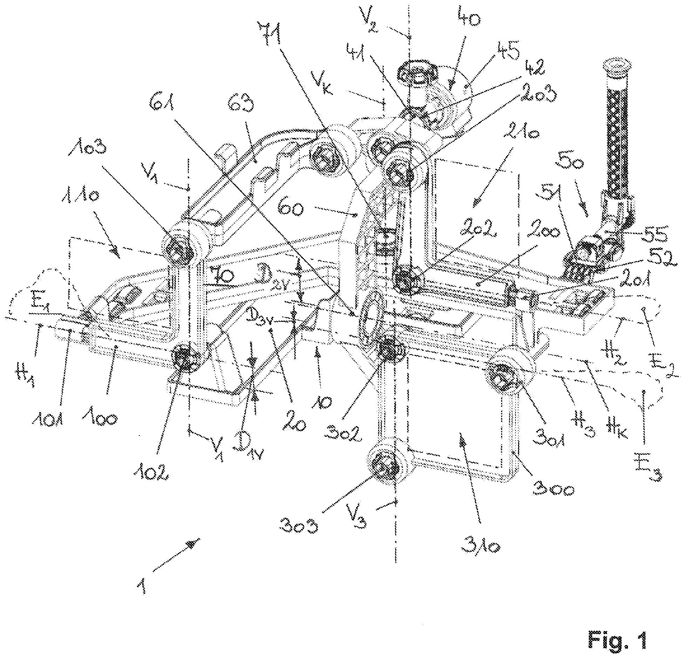

Die Figuren 1 bis 5 zeigen jeweils einen Ausschnitt aus einem Fahrzeugscheinwerfer 1, welcher ein Gehäuse 10 aufweist, das durch eine Grundplatte 20 als Teil des Gehäuses 10 veranschaulicht ist und über drei Tragelemente 100, 200, 300 verfügt, welche jeweils zur Aufnahme bzw. zur Halterung von optisch relevanten Baueinheiten 110, 210, 310 dienen. Die Position der optisch relevanten Baueinheiten 110, 210, 310 innerhalb der Tragelemente 100, 200, 300 ist in Fig. 1 jeweils durch strichlierte Rechtecke angedeutet.

Bei einer optisch relevanten Baueinheit 110, 210, 310 handelt es sich wie eingangs bereits erwähnt beispielsweise um ein Lichtmodul, um eine Lichtmodul-Einheit, welche aus einer oder mehreren Lichtmodulen besteht, oder um einen oder mehrere Bauteile eines solchen Lichtmoduls oder einer solchen Lichtmodul-Einheit, wobei diese Bauteile einen Einfluss auf die mit dem Lichtmodul oder die mit der Lichtmodul-Einheit erzeugte Lichtverteilung haben.

Jedes Tragelement 100, 200, 300 ist jeweils um seine Horizontalachse H₁, H₂, H₃ sowie um seine Vertikalachse V₁, V₂, V₃ verschwenkbar und hier jeweils als Tragrahmen gestaltet. Somit können die in den Tragelementen 100, 200, 300 befestigten Baueinheiten 110, 210, 310 jeweils in horizontaler sowie in vertikaler Achsenrichtung verschwenkt werden. Zur Einstellung einer sogenannten Grundeinstellung können die Tragelemente 100, 200, 300 jeweils um die Vertikalachsen V₁, V₂, V₃ verschwenkt werden, wobei das von den Baueinheiten 110, 210, 310 erzeugte Lichtbild horizontal justiert wird. Weiters können die Baueinheiten 110, 210, 310 jeweils um Horizontalachsen H₁, H₂, H₃ zur Leuchtweitenregelung verschwenkt werden. Aufgrund der verschwenkbaren Tragelemente 100, 200, 300 können diese beispielsweise auch zur Realisierung einer Kurvenlichtfunktion verwendet werden, wobei dazu die Kurvenlichtachsen auch abweichend von den Vertikalachsen V₁, V₂, V₃ positioniert sein können.

Grundsätzlich können im Rahmen der Erfindung die Tragelemente jeweils auch einstückig mit dem Lichtmodul oder mit einer Lichtmodul-Einheit ausgebildet bzw. verbunden sein.

Das erste Tragelement 100 ist mit drei Lagerpunkten 101, 102, 103 in dem Gehäuse 10 bzw. an der Grundplatte 20 des Gehäuses gelagert, wobei ein erster und ein zweiter Lagerpunkt 101, 102 die Horizontalachse H₁ und der zweite und ein dritter Lagerpunkt 102, 103 die Vertikalachse V₁ bilden. Der zweite Lagerpunkt 102 des ersten Tragelementes 100 ist ein Fix-Lagerpunkt 102, welcher in Bezug auf das Gehäuse 10 ortsfest ist. Über den Fix-Lagerpunkt 102, durch welchen die Horizontalachse H₁ und die Vertikalachse V₁ verlaufen und sich dort schneiden, ist das erste Tragelement 100 gelenkig mit dem Gehäuse 10 bzw. an einem in Bezug auf das Gehäuse 10 feststehenden Bauteil, nämlich der Grundplatte 20, gelenkig gelagert. Der Fix-Lagerpunkt 102 ist somit in Bezug auf das Gehäuse 10 nicht verschieblich, Verschwenkbewegungen des Tragelementes 100 um diesen Fix-Lagerpunkt 102 sind aber möglich. Die Lagerpunkte 101,102,103 sind im Wesentlichen in Dreiecksform angeordnet und bilden ein sogenanntes Verstelldreieck des ersten Tragelements 100 für die erste optisch relevante Baueinheit 110. Das erste Tragelement 100 ist hier in Rahmenform gestaltet.

Außerdem ist das zweite Tragelement 200 mit drei Lagerpunkten 201, 202, 203 in dem Gehäuse 10 gelagert, wobei ein erster und ein zweiter Lagerpunkt 201, 202 die Horizontalachse H₂ und der zweite und ein dritter Lagerpunkt 202, 203 die Vertikalachse V₂ bilden. Der zweite Lagerpunkt 202 des zweiten Tragelementes 200 ist ein Fix-Lagerpunkt 202, welcher in Bezug auf das Gehäuse 10 ortsfest ist. Über den Fix-Lagerpunkt 202, durch welchen die Horizontalachse H₂ und die Vertikalachse V₂ verlaufen und sich dort schneiden, ist auch das zweite Tragelement 200 gelenkig mit dem Gehäuse 10 bzw. an einem in Bezug auf das Gehäuse feststehenden Bauteil gelenkig gelagert. Der Fix-Lagerpunkt 202 ist somit in Bezug auf das Gehäuse 10 nicht verschieblich, Verschwenkbewegungen des zweiten Tragelementes 200 um diesen Fix-Lagerpunkt 202 sind aber möglich.

Ebenso verhält es sich mit dem dritten Tragelement 300, welches mit drei Lagerpunkten 301, 302, 303 in dem Gehäuse 10 gelagert ist. Ein erster und ein zweiter Lagerpunkt 301, 302 bilden die Horizontalachse H₃ und der zweite und ein dritter Lagerpunkt 302, 303 bilden die Vertikalachse V₃. Der zweite Lagerpunkt 302 des dritten Tragelementes 300 ist ein Fix-Lagerpunkt 302, welcher in Bezug auf das Gehäuse 10 ortsfest ist. Über den Fix-Lagerpunkt 302, durch welchen die Horizontalachse H₃ und die Vertikalachse V₃ verlaufen und sich dort schneiden, ist das dritte Tragelement 300 gelenkig mit dem Gehäuse 10 bzw. an einem in Bezug auf das Gehäuse feststehenden Bauteil gelenkig gelagert. Der Fix-Lagerpunkt 302 ist somit in Bezug auf das Gehäuse 10 nicht verschieblich, Verschwenkbewegungen um diesen Fix-Lagerpunkt 302 sind jedoch auch für das dritte Tragelement 300 möglich.

Das erste Tragelement 100 ist rahmenartig zur Aufnahme bzw. Halterung der ersten optisch relevanten Baueinheit 110 gestaltet, wobei eine im Wesentlichen horizontale Konturlinie der optisch relevanten Baueinheit 110 bzw. eine im Wesentlichen horizontalen Konturlinie des Tragelements 100 in einer ersten Scheinwerferebene E₁, die im Wesentlichen horizontal ist, liegen. Die erste Scheinwerferebene E₁ befindet sich in einem ersten Vertikalabstand D_{1V} oberhalb einer ebenfalls im Wesentlichen horizontalen Bezugsebene des Gehäuses 10, beispielsweise der Bezugsebene durch die Grundplatte 20 des Gehäuses 10, von dieser entfernt.

Das zweite Tragelement 200 ist ebenfalls rahmenartig zur Aufnahme bzw. Halterung der zweiten optisch relevanten Baueinheit 210 gestaltet, wobei eine im Wesentlichen horizontale Konturlinie der optisch relevanten Baueinheit 210 bzw. eine im Wesentlichen horizontalen Konturlinie des Tragelements 200 in einer zweiten Scheinwerferebene E₂, die im Wesentlichen horizontal ist, liegen. Die zweite Scheinwerferebene E₂ befindet sich in einem zweiten Vertikalabstand D_{2V} oberhalb der Bezugsebene durch die Grundplatte 20 des Gehäuses 10 von dieser entfernt.

Das dritte Tragelement 300 ist ebenfalls rahmenartig zur Aufnahme bzw. Halterung der dritten optisch relevanten Baueinheit 310 gestaltet, wobei eine im Wesentlichen horizontale Konturlinie der optisch relevanten Baueinheit 310 bzw. eine im Wesentlichen horizontalen Konturlinie des Tragelements 300 in einer dritten Scheinwerferebene E₃, die im Wesentlichen horizontal ist, liegen. Die dritte Scheinwerferebene E₃ befindet sich in einem dritten Vertikalabstand D_{3V} unterhalb der Bezugsebene durch die Grundplatte 20 des Gehäuses 10 von dieser entfernt. Weiters ist das dritte Tragelement 300 im Wesentlichen unterhalb des zweiten Tragelements 200 angeordnet, während das erste Tragelement 100 - wie in Fig. 1 veranschaulicht - jeweils seitwärts der beiden anderen Tragelemente 200, 300 versetzt angeordnet ist.

Bei dem in den Abbildungen Fig. 1 bis Fig. 5 veranschaulichten erfindungsgemäßen Fahrzeugscheinwerfer 1 sind die Lichtmodul-Einheiten 110, 210, 310 in drei unterschiedlichen Scheinwerferebenen E₁, E₂, E₃, die voneinander in vertikaler Richtung beabstandet sind, angeordnet. Die Lichtmodul-Einheiten 110, 210, 310 können dabei übereinander und/oder seitlich zueinander versetzt angeordnet sein.

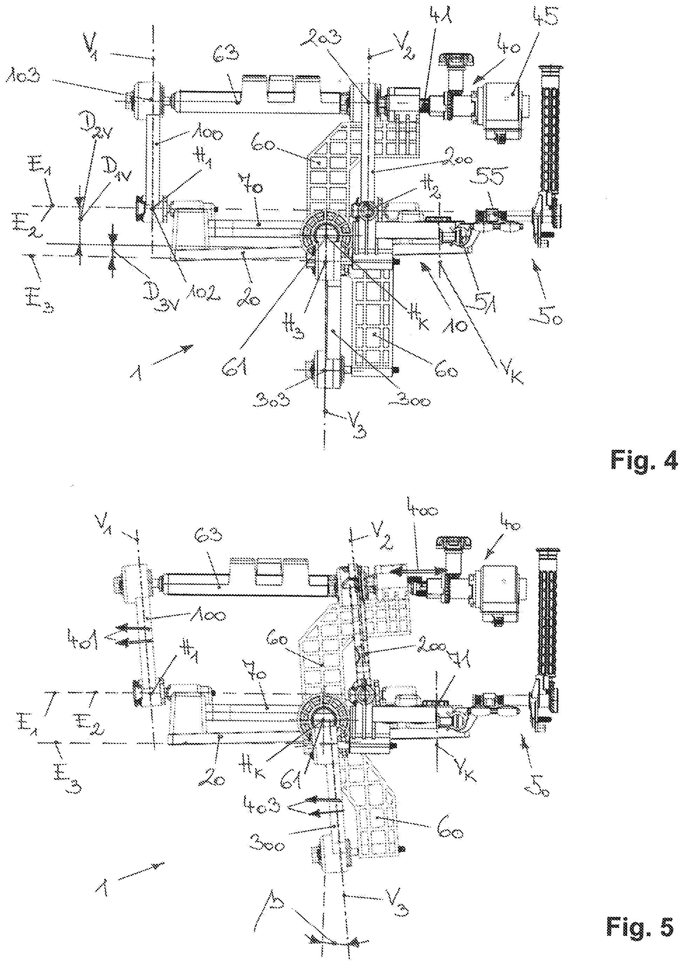

Zum gemeinsamen Verschwenken der Tragelemente 100, 200, 300 um deren Horizontalachsen H₁, H₂, H₃ ist eine Horizontalachsen-Verschwenkeinrichtung 40 vorgesehen, deren Funktionsweise insbesondere in den Abbildungen Fig. 4 und Fig. 5 deutlich zu erkennen ist. Die Horizontalachsen-Verschwenkeinrichtung 40 dient zur Leuchtweitenregulierung der Lichtmodule 110, 210, 310 und umfasst ein Koppelgelenk 41, welches mit einer Horizontalachsen-Koppelvorrichtung 60 - vergleichbar mit einem vertikalen Hebelarm - verbunden ist. Die Horizontalachsen-Koppelvorrichtung 60 ist dazu in einem Lagerpunkt 61 um eine Koppelvorrichtungs-Horizontalachse H_{K} in Bezug zum Gehäuse 10 drehbar gelagert.

Weiters umfasst die Horizontalachsen-Verschwenkeinrichtung 40 ein Stellelement 42 sowie einen Stellantrieb 45, vorzugsweise einen elektrischen Antrieb 45, welche in Zusammenwirkung eine Verlagerung des Koppelgelenks 41 der Horizontalachsen-Verschwenkeinrichtung 40 in Doppelpfeilrichtung 400 ermöglichen. Zum Verschwenken der Tragelemente 100, 200, 300 um deren Horizontalachsen H₁, H₂, H₃ wird somit der Stellantrieb 45 der Horizontalachsen-Verschwenkeinrichtung 40 betätigt, wobei die Horizontalachsen-Verschwenkeinrichtung 40 mittels der Horizontalachsen-Koppelvorrichtung 60 hier mit zwei jeweils um deren Horizontalachsen H₂, H₃ verschwenkbaren Tragelementen 200, 300 direkt beweglich verbunden ist. Das weitere Tragelement 100, welches in Bezug zu den beiden Tragelementen 200, 300 etwas seitlich versetzt angeordnet ist, ist hier mittels eines Koppelstangen-Elements 63, das ebenfalls an der Horizontalachsen-Koppelvorrichtung 60 befestigt ist, indirekt mit der Horizontalachsen-Verschwenkeinrichtung 40 verbunden.

Somit können bei Betätigung der Horizontalachsen-Verschwenkeinrichtung 40 sämtliche Tragelemente 100, 200, 300 direkt und/oder indirekt gleichzeitig um deren Horizontalachsen H₁, H₂, H₃ verschwenkt und so die Leuchtweiten der einzelnen Baueinheiten bzw. Lichtmodule 110, 210, 310 reguliert werden. Der Stellantrieb 45, vorzugsweise ein elektrischer Antrieb zur Leuchtweitenregulierung, ist so angeordnet, dass dieser bei Justierung der Grundeinstellung der Lichtmodul-Einheiten 110, 210, 310 mit verschoben wird und anschließend im Betrieb des Scheinwerfers 1 die Leuchtweiten der erzeugten Lichtverteilungen durch Schwenken um die horizontalen Achsen H₁, H₂, H₃, vorzugsweise dynamisch, reguliert.

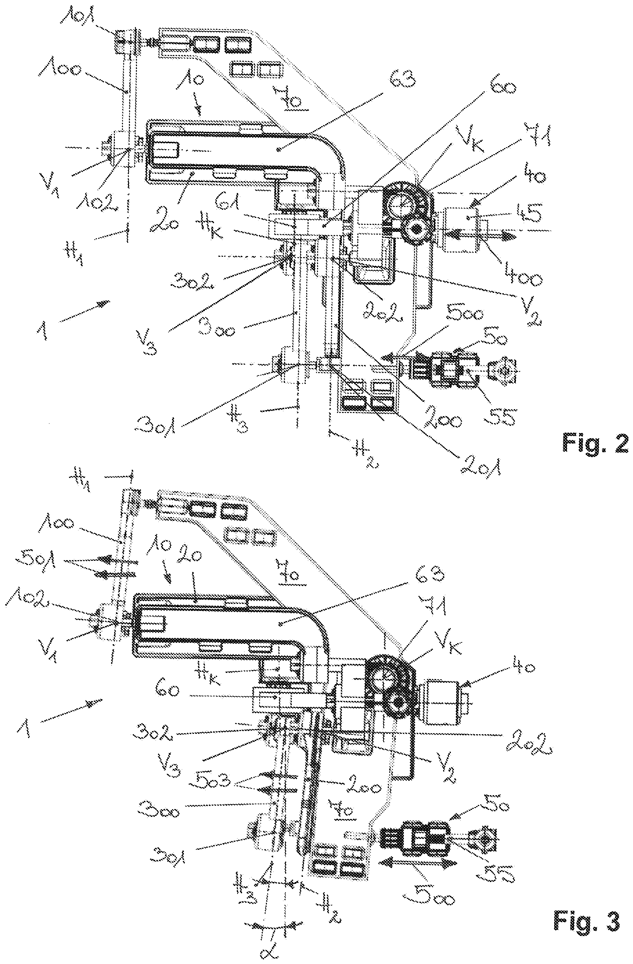

Zum Verschwenken der Tragelemente 100, 200, 300 um deren Vertikalachsen V₁, V₂, V₃ ist eine Vertikalachsen-Verschwenkeinrichtung 50 vorgesehen, deren Funktionsweise insbesondere den Abbildungen Fig. 2 und Fig. 3 entnommen werden kann. Üblicherweise handelt es sich dabei um eine Verschwenkeinrichtung, welche einen ähnlichen Aufbau aufweist wie die Horizontalachsen-Verschwenkeinrichtung 40. Die Vertikalachsen-Verschwenkeinrichtung 50 ist in dem gezeigten Beispiel ebenfalls mit einem Koppelgelenk 51 an einer Vertikalachsen-Koppelvorrichtung 70 befestigt, welche - vergleichbar mit einem horizontalen Hebelarm - mit den Tragelementen 100, 200, 300 gekoppelt ist. Die Vertikalachsen-Koppelvorrichtung 70 ist dazu in einem Lagerpunkt 71 um eine Koppelvorrichtungs-Vertikalachse V_{K} in Bezug zum Gehäuse 10 drehbar gelagert. Die Vertikalachsen-Verschwenkeinrichtung 50 umfasst weiters ein Stellelement 52 sowie einen Stellantrieb 55, der hier beispielsweise als elektrischer Antrieb 55 ausgeführt ist.

Die Verschwenkeinrichtung 50 ist mittels der Vertikalachsen-Koppelvorrichtung 70 mit den jeweils um deren Vertikalachsen V₁, V₂, V₃ verschwenkbaren Tragelementen 100, 200, 300 gekoppelt.

Unter Zusammenwirkung des Stellelements 52 sowie des Stellantriebs 55 wird bei Betätigung der Vertikalachsen-Verschwenkeinrichtung 50 eine Verlagerung des Koppelgelenks 51 in Doppelpfeilrichtung 500 ermöglicht. Zum Verschwenken der Tragelemente 100, 200, 300 um deren Vertikalachsen V₁, V₂, V₃ wird somit der Stellantrieb 55 der Vertikalachsen-Verschwenkeinrichtung 50 betätigt, wobei die Vertikalachsen-Verschwenkeinrichtung 50 mittels der Vertikalachsen-Koppelvorrichtung 70 hier mit allen um deren Vertikalachsen V₁, V₂, V₃ verschwenkbaren Tragelementen 100, 200, 300 direkt beweglich verbunden ist.

Somit können bei Betätigung der Vertikalachsen-Verschwenkeinrichtung 50 sämtliche Tragelemente 100, 200, 300 direkt sowie gleichzeitig um deren Vertikalachsen V₁,V₂, V₃ verschwenkt und so die Horizontaleinstellungen der einzelnen Baueinheiten bzw. Lichtmodule 110, 210, 310 reguliert werden. Der Stellantrieb 55 ist so angeordnet, dass dieser bei Justierung der Grundeinstellung der Lichtmodul-Einheiten 110, 210, 310 mit verschoben wird und anschließend im Betrieb des Scheinwerfers 1 die Horizontaleinstellungen der erzeugten Lichtverteilungen durch Schwenken um die vertikalen Achsen V₁, V₂, V₃, vorzugsweise dynamisch, reguliert.

Alle gelenkigen Verbindungen sind dabei vorteilhafterweise als Kugelgelenke ausgebildet, sodass sich eine Verdrehung der beweglichen Teile jeweils um zwei Achsen bzw. sowohl in horizontaler, als auch in vertikaler Richtung, realisieren lässt.

Fig. 5 zeigt eine gegenüber Fig. 4 in horizontaler Achsenrichtung verschwenkte Anordnung der Tragelemente 100, 200, 300 nach Betätigung der Horizontalachsen-Verschwenkeinrichtung 40 zur Leuchtweitenregulierung. Durch Verlagern des Koppelgelenks 41 in Pfeilrichtung 400, welches Koppelgelenk 41 mit der Horizontalachsen-Koppelvorrichtung 60 bzw. mit dem Koppelstangen-Element 63 verbunden ist, werden sämtliche Tragelemente 100, 200, 300 jeweils um deren Horizontalachsen H₁, H₂, H₃ um einen Schwenkwinkel β um die Horizontalachse verschwenkt. Die Verschwenkungsrichtungen der Tragelemente 100, 200, 300 um deren Horizontalachsen H₁, H₂, H₃ sind jeweils mit den Pfeilen 401, 402, 403 angedeutet.

Durch die Anordnung der horizontalen Drehachse H_{K} der Horizontalachsen-Koppelvorrichtung 60 zwischen den Tragelementen 100, 200, 300, vorzugsweise in der geometrischen Mitte zwischen den Scheinwerferebenen der Tragelemente, wirkt im Falle einer Belastung, insbesondere einer Schockbelastung entgegen der Fahrtrichtung nur die resultierende Differenzkraft auf die Horizontalachsen-Koppelvorrichtung 60. Die deutlich größere, aus der Belastung auftretende Gesamtkraft hingegen wird in den Lagerpunkt 61 der Horizontalachsen-Koppelvorrichtung 60 eingeleitet.

Fig. 3 zeigt eine gegenüber Fig. 2 in vertikaler Achsenrichtung verschwenkte Anordnung der Tragelemente 100, 200, 300 nach Betätigung der Vertikalachsen-Verschwenkeinrichtung 50 zur Leuchtenhorizontaleinstellung. Durch Verlagern des Koppelgelenks 51 in Pfeilrichtung 500, welches Koppelgelenk 51 mit der Vertikalachsen-Koppelvorrichtung 70 verbunden ist, werden sämtliche Tragelemente 100, 200, 300 jeweils um deren Vertikalachsen V₁,V₂, V₃ um einen Schwenkwinkel α um die Vertikalachse verschwenkt. Die Verschwenkungsrichtungen der Tragelemente 100, 200, 300 um deren Vertikalachsen V₁, V₂, V₃ sind jeweils mit den Pfeilen 501, 502, 503 angedeutet.

Durch die Anordnung der vertikalen Drehachse V_{K} der Vertikalachsen-Koppelvorrichtung 70 zwischen den Tragelementen 100, 200, 300, vorzugsweise in der geometrischen Mitte zwischen den Scheinwerferebenen der Tragelemente, wirkt im Falle einer Belastung, insbesondere einer Schockbelastung entgegen der Fahrtrichtung nur die resultierende Differenzkraft auf die Vertikalachsen-Koppelvorrichtung 70. Die deutlich größere, aus der Belastung auftretende Gesamtkraft hingegen wird in den Lagerpunkt 71 eingeleitet.

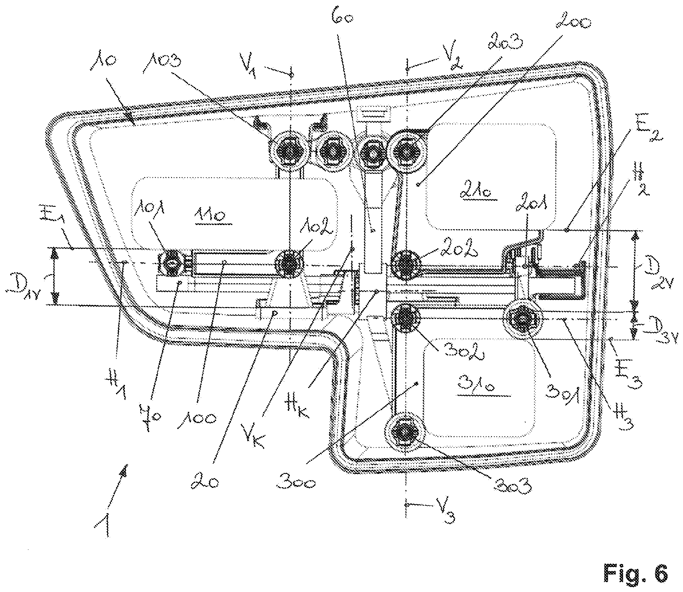

Fig. 6 zeigt in einer Frontalansicht von vorne eine zweite Ausführungsform eines erfindungsgemäßen Fahrzeugscheinwerfers 1 innerhalb eines Scheinwerfergehäuses 10. Auch hier sind in drei Tragelementen 100, 200, 300 jeweils optisch relevante Baueinheiten 110, 210, 310 befestigt, wobei die beiden Tragelemente 200, 300 im Wesentlichen vertikal übereinander angeordnet sind und das Tragelement 100 jeweils seitlich zu den beiden anderen Tragelementen 200, 300 versetzt ist. Die Scheinwerferebenen E1, E2, E3, welche hier jeweils eine im Wesentlichen horizontale Konturlinie der Baueinheiten 110, 210, 310 umfassen, weisen jeweils unterschiedliche Vertikalabstände D_{1V}, D_{2V}, D_{3V} zu einem Bezugsniveau des Gehäuses, beispielsweise zu einer Grundplatte 20 des Gehäuses 10, auf.

Die in Fig. 6 gezeigte Horizontalachsen-Koppelvorrichtung 60 ist hier mit allen drei Tragelementen 100, 200, 300 direkt beweglich verbunden sowie um eine Koppelvorrichtungs-Horizontalachse H_{K} in Bezug zum Gehäuse (10) drehbar gelagert. Ebenso ist die Horizontalachsen-Koppelvorrichtung 60 mit allen verschwenkbaren Tragelementen 100, 200, 300 direkt beweglich verbunden.

Die Erfindung erlaubt ein synchrones Verschwenken von zwei oder auch mehr Tragelementen und den daran befestigten Lichtmodulen bzw. Lichtmodul-Einheiten um jeweils zwei Achsen mit lediglich einer der Anzahl der Achsenpaare entsprechenden Anzahl an Verstelleinrichtungen. Das Ausmaß des Verschwenkens, d.h. der Winkel, um den die Tragrahmen um ihre Horizontalachsen bzw. Vertikalachsen verschwenkt werden, ist dabei vorzugsweise für sämtliche Tragrahmen jeweils gleich groß, d.h. bei einem Verschwenken eines Tragrahmens um einen Schwenkwinkel α um seine Vertikalachse bzw. um einen Schwenkwinkel β um seine Horizontalachse wird auch der zweite Tragrahmen bzw. werden auch die weiteren Tragrahmen jeweils um dieselben Schwenkwinkel um die Horizontalachse bzw. die Vertikalachse mit verschwenkt.

Dabei ist ein solches Verstellen insbesondere auch dann möglich, wenn der Scheinwerfer über eine große Pfeilung verfügt. Beispielsweise weisen die hier gezeigten Scheinwerfer Pfeilungen von ca. 45° auf.

Die Erfindung ist keinesfalls auf die in den Zeichnungen dargestellten Ausführungen und Anordnungen beschränkt. Im Rahmen der Erfindung ist es möglich, Fahrzeugscheinwerfer in beliebigen Gestaltungsvarianten auch mit mehr als drei optisch relevanten Baueinheiten auszuführen. Beispielsweise können bei einem solchen erfindungsgemäßen Fahrzeugscheinwerfer jeweils zwei Lichtmodule bzw. Lichtmodul-Einheiten je Scheinwerferebene in zwei oder drei voneinander vertikal beabstandeten Scheinwerferebenen angeordnet sein. Somit lassen sich beispielsweise vier Lichtmodule bzw. Lichtmodul-Einheiten besonders kompakt in zwei vertikal übereinander angeordneten Scheinwerferebenen gruppieren.

### LISTE DER POSITIONSBEZEICHNUNGEN

- 1: Fahrzeugscheinwerfer
- 10: Gehäuse
- 20: Grundplatte des Gehäuse
- 40: Horizontalachsen-Verschwenkeinrichtung; Leuchtweitenregulierung
- 41: Koppelgelenk
- 42: Stellelement
- 45: Stellantrieb
- 50: Vertikalachsen-Verschwenkeinrichtung; Leuchtenhorizontaleinstellung
- 51: Koppelgelenk
- 52: Stellelement
- 55: Stellantrieb
- 60: Horizontalachsen-Koppelvorrichtung; vertikaler Hebelarm
- 61: Lagerpunkt der Horizontalachsen-Koppelvorrichtung
- 63: Koppelstangen-Element
- 70: Vertikalachsen-Koppelvorrichtung; horizontaler Hebelarm
- 71: Lagerpunkt der Vertikalachsen-Koppelvorrichtung
- 100: erstes Tragelement für die erste Baueinheit; Tragrahmen
- 101: Horizontal-Lagerpunkt an Horizontalachse H₁
- 102: Fix-Lagerpunkt
- 103: Vertikal-Lagerpunkt an Vertikalachse V₁
- 110: erste optisch relevante Baueinheit; Lichtmodul
- 200: zweites Tragelement für die zweite Baueinheit; Tragrahmen
- 201: Horizontal-Lagerpunkt an Horizontalachse H₂
- 202: Fix-Lagerpunkt
- 203: Vertikal-Lagerpunkt an Vertikalachse V₂
- 210: zweite optisch relevante Baueinheit; Lichtmodul
- 300: drittes Tragelement für die dritte Baueinheit; Tragrahmen
- 301: Horizontal-Lagerpunkt an Horizontalachse H₃
- 302: Fix-Lagerpunkt
- 303: Vertikal-Lagerpunkt an Vertikalachse V₃
- 310: dritte optisch relevante Baueinheit; Lichtmodul
- 400: Verschwenkung der Horizontalachsen-Verschwenkeinrichtung (Doppelpfeil)
- 401: Verschwenkung des ersten Tragelements um Horizontalachse H₁ (bzw. 402, 403)
- 500: Verschwenkung der Vertikalachsen-Verschwenkeinrichtung (Doppelpfeil)
- 501: Verschwenkung des ersten Tragelements um Vertikalachse V₁ (bzw. 502, 503)

### LISTE DER POSITIONSBEZEICHNUNGEN (FORTSETZUNG)

- D_{1V}: vertikaler Abstand zwischen erster Scheinwerferebene und Grundplatte
- D_{2V}: vertikaler Abstand zwischen zweiter Scheinwerferebene und Grundplatte
- D_{3V}: vertikaler Abstand zwischen dritter Scheinwerferebene und Grundplatte
- E₁: erste Scheinwerferebene
- E₂: zweite Scheinwerferebene
- E₃: dritte Scheinwerferebene
- H₁: Horizontalachse des ersten Tragelements
- H₂: Horizontalachse des zweiten Tragelements
- H₃: Horizontalachse des dritten Tragelements
- H_{K}: horizontale Drehachse der Horizontalachsen-Koppelvorrichtung
- V₁: Vertikalachse des ersten Tragelements
- V₂: Vertikalachse des ersten Tragelements
- V₃: Vertikalachse des ersten Tragelements
- V_{K}: vertikale Drehachse der Vertikalachsen-Koppelvorrichtung
- α: Schwenkwinkel um Vertikalachse; Leuchtenhorizontaleinstellung
- β: Schwenkwinkel um Horizontalachse; Leuchtweitenregulierung

## Patentansprüche

1. Fahrzeugscheinwerfer (1) mit einem Gehäuse (10) sowie mit zumindest zwei optisch relevanten Baueinheiten (110, 210, 310), beispielsweise Lichtmodul-Einheiten (110, 210, 310), wobei jede optisch relevante Baueinheit (110, 210, 310) in einem eigenen Tragelement (100, 200, 300) befestigt ist und jedes Tragelement (100, 200, 300) in Bezug zum Gehäuse (10) jeweils um eine Horizontalachse (H₁, H₂, H₃) sowie jeweils um eine Vertikalachse (V₁, V₂, V₃) verschwenkbar gelagert ist, wobei zum Verschwenken der Tragelemente (100, 200, 300) um deren Horizontalachsen (H₁, H₂, H₃) eine Horizontalachsen-Verschwenkeinrichtung (40) vorgesehen ist, welche Horizontalachsen-Verschwenkeinrichtung (40) mittels einer Horizontalachsen-Koppelvorrichtung (60) mit zumindest zwei jeweils um deren Horizontalachsen (H₁, H₂, H₃) verschwenkbaren Tragelementen (100, 200, 300) beweglich verbunden ist, und wobei zum Verschwenken der Tragelemente (100, 200, 300) um deren Vertikalachsen (V₁, V₂, V₃) eine Vertikalachsen-Verschwenkeinrichtung (50) vorgesehen ist, welche Vertikalachsen-Verschwenkeinrichtung (50) gegebenenfalls mittels einer um eine Koppelvorrichtungs-Vertikalachse (V_{K}) in Bezug zum Gehäuse (10) drehbar gelagerten Vertikalachsen-Koppelvorrichtung (70) mit zumindest zwei jeweils um deren Vertikalachsen (V₁, V₂, V₃) verschwenkbaren Tragelementen (100, 200, 300) gekoppelt ist, **dadurch gekennzeichnet, dass** die Tragelemente (100, 200, 300) zumindest in zwei voneinander in vertikaler Richtung (D_{1V}, D_{2V}, D_{3V}) beabstandeten Scheinwerferebenen (E₁, E₂, E₃) angeordnet sind, wobei die Horizontalachsen-Koppelvorrichtung (60) mit zumindest zwei Tragelementen (100, 200, 300) beweglich verbunden sowie um eine Koppelvorrichtungs-Horizontalachse (H_{K}) in Bezug zum Gehäuse (10) drehbar gelagert ist.

2. Fahrzeugscheinwerfer (1) nach Anspruch 1, **dadurch gekennzeichnet, dass** die Horizontalachsen-Koppelvorrichtung (60) mit zumindest zwei Tragelementen (200, 300), welche zumindest in zwei in vertikaler Richtung (D_{2V}, D_{3V}) voneinander beabstandeten Scheinwerferebenen (E₂, E₃) angeordnet sind, direkt beweglich verbunden ist.

3. Fahrzeugscheinwerfer (1) nach Anspruch 1 oder 2, **dadurch gekennzeichnet, dass** die Horizontalachsen-Koppelvorrichtung (60) mit zumindest zwei Tragelementen (200, 300) direkt beweglich verbunden ist und mit zumindest einem weiteren Tragelement (100) mittels eines Koppelelements (63) indirekt verbunden ist.

4. Fahrzeugscheinwerfer (1) nach einem der Ansprüche 1 bis 3, **dadurch gekennzeichnet, dass** zumindest drei optisch relevante Baueinheiten (110, 210, 310) vorgesehen sind, wobei zumindest zwei optisch relevante Baueinheiten (110, 210) mit ihren Tragelementen (100, 200) nebeneinander in einer ersten Scheinwerferebene (E₁) angeordnet sind und zumindest eine weitere optisch relevante Baueinheit (310) mit ihrem Tragelement (300) in einer in vertikaler Richtung (D_{3V}) von der ersten Scheinwerferebene (E₁) beabstandeten weiteren Scheinwerferebene (E₃) angeordnet ist.

5. Fahrzeugscheinwerfer (1) nach einem der Ansprüche 1 bis 4, **dadurch gekennzeichnet, dass** jedes Tragelement (100, 200, 300) jeweils mit drei Lagerpunkten (101, 102, 103; 201, 202, 203; 301, 302, 303) in dem Gehäuse (10) gelagert ist, wobei ein erster Horizontal-Lagerpunkt (101, 201, 301) und ein zweiter Fix-Lagerpunkt (102, 202, 302) jeweils Lagerungen um die jeweilige Horizontalachse (H₁, H₂, H₃) bilden und der zweite Fix-Lagerpunkt (102, 202, 302) und ein dritter Vertikal-Lagerpunkt (103, 203, 303) jeweils Lagerungen um die jeweilige Vertikalachse (V₁, V₂, V₃) der Tragelemente (100, 200, 300) bilden.

6. Fahrzeugscheinwerfer (1) nach Anspruch 5, **dadurch gekennzeichnet, dass** der zweite Fix-Lagerpunkt (102, 202, 302) jedes Tragelementes (100, 200, 300) jeweils in Bezug zum Gehäuse (10) ortsfest ist.

7. Fahrzeugscheinwerfer (1) nach einem der Ansprüche 1 bis 6, **dadurch gekennzeichnet, dass** die Horizontalachsen-Verschwenkeinrichtung (40) an der Horizontalachsen-Koppelvorrichtung (60) vorzugsweise direkt angreift.

8. Fahrzeugscheinwerfer (1) nach einem der Ansprüche 1 bis 7, **dadurch gekennzeichnet, dass** die Vertikalachsen-Verschwenkeinrichtung (50) an der Vertikalachsen-Koppelvorrichtung (70) vorzugsweise direkt angreift.

9. Fahrzeugscheinwerfer (1) nach einem der Ansprüche 1 bis 8, **dadurch gekennzeichnet, dass** die Vertikalachsen-Verschwenkeinrichtung (50) mittels einer um eine Koppelvorrichtungs-Vertikalachse (V_{K}) in Bezug zum Gehäuse (10) drehbar gelagerten Vertikalachsen-Koppelvorrichtung (70) mit zumindest zwei jeweils um deren Vertikalachsen (V₁, V₂, V₃) verschwenkbaren Tragelementen (100, 200, 300) gekoppelt ist, und die um die Koppelvorrichtungs-Vertikalachse (V_{K}) drehbar gelagerte Vertikalachsen-Koppelvorrichtung (70) an allen verschwenkbaren Tragelementen (100, 200, 300) vorzugsweise direkt angreift.

10. Fahrzeugscheinwerfer (1) nach einem der Ansprüche 1 bis 9, **dadurch gekennzeichnet, dass** die Vertikalachsen-Koppelvorrichtung (70) die Tragelemente (100, 200, 300) direkt miteinander verbindet.

11. Fahrzeugscheinwerfer (1) nach einem der Ansprüche 5 bis 10, **dadurch gekennzeichnet, dass** die Vertikalachsen-Koppelvorrichtung (70) mit den verschwenkbaren Tragelementen (100, 200, 300) jeweils in deren Horizontal-Lagerpunkten (101, 201, 301) vorzugsweise gelenkig verbunden ist.

12. Fahrzeugscheinwerfer (1) nach einem der Ansprüche 1 bis 11, **dadurch gekennzeichnet, dass** die Horizontalachsen-Koppelvorrichtung (60) zumindest zwei Tragrahmen (200, 300) direkt miteinander verbindet.

13. Fahrzeugscheinwerfer (1) nach einem der Ansprüche 1 bis 12, **dadurch gekennzeichnet, dass** die Horizontalachsen-Koppelvorrichtung (60) mit allen Tragelementen (100, 200, 300) direkt und/oder indirekt beweglich verbunden ist.

14. Fahrzeugscheinwerfer (1) nach einem der Ansprüche 5 bis 13, **dadurch gekennzeichnet, dass** die Horizontalachsen-Koppelvorrichtung (60) mit den verschwenkbaren Tragelementen (100, 200, 300) jeweils in deren Vertikal-Lagerpunkten (103, 203, 303) vorzugsweise gelenkig verbunden ist.

15. Fahrzeugscheinwerfer (1) nach einem der Ansprüche 1 bis 14, **dadurch gekennzeichnet, dass** die Koppelvorrichtungs-Horizontalachse (H_{K}) zwischen zwei in vertikaler Richtung (D_{1V}, D_{2V}, D_{3V}) voneinander beabstandeten Scheinwerferebenen (E₁, E₂, E₃) angeordnet ist.

16. Fahrzeugscheinwerfer (1) nach einem der Ansprüche 1 bis 15, **dadurch gekennzeichnet, dass** die Koppelvorrichtungs-Horizontalachse (H_{K}) im Wesentlichen mittig der Horizontalachsen-Koppelvorrichtung (60) angeordnet ist.

17. Fahrzeugscheinwerfer (1) nach einem der Ansprüche 1 bis 16, **dadurch gekennzeichnet, dass** die Vertikalachsen-Verschwenkeinrichtung (50) mittels einer um eine Koppelvorrichtungs-Vertikalachse (V_{K}) in Bezug zum Gehäuse (10) drehbar gelagerten Vertikalachsen-Koppelvorrichtung (70) mit zumindest zwei jeweils um deren Vertikalachsen (V₁, V₂, V₃) verschwenkbaren Tragelementen (100, 200, 300) gekoppelt ist, und die Koppelvorrichtungs-Vertikalachse (V_{K}) im Wesentlichen mittig der Vertikalachsen-Koppelvorrichtung (70) angeordnet ist.

18. Fahrzeugscheinwerfer (1) nach einem der Ansprüche 1 bis 17, **dadurch gekennzeichnet, dass** mit der Horizontalachsen-Koppelvorrichtung (60) alle Tragelemente (100, 200, 300) jeweils um deren Horizontalachsen (H₁, H₂, H₃) synchron verschwenkbar sind.

19. Fahrzeugscheinwerfer (1) nach einem der Ansprüche 1 bis 18, **dadurch gekennzeichnet, dass** mit der Vertikalachsen-Koppelvorrichtung (70) alle Tragelemente (100, 200, 300) jeweils um deren Vertikalachsen (V₁, V₂, V₃) synchron verschwenkbar sind.

20. Fahrzeugscheinwerfer (1) nach einem der Ansprüche 1 bis 19, **dadurch gekennzeichnet, dass** die Horizontalachsen-Koppelvorrichtung (60) und/oder die Vertikalachsen-Koppelvorrichtung (70) als einstückiges Koppelelement (60, 70) ausgebildet ist bzw. sind.

21. Fahrzeug, umfassend zumindest einen Fahrzeugscheinwerfer (1) nach einem der Ansprüche 1 bis 20.

## Claims

1. Vehicle headlamp (1), with a housing (10), and with at least two optically-relevant structural units (110, 210, 310), for example light module units (110, 210, 310), wherein
each optically-relevant structural unit (110, 210, 310) is fixed in a separate supporting element (100, 200, 300), and each supporting element (100, 200, 300) is mounted such that it can pivot with respect to the housing (10), in each case about a horizontal axis (H₁, H₂, H₃), and in each case about a vertical axis (V₁, V₂, V₃), wherein
for purposes of pivoting the supporting elements (100, 200, 300) about their horizontal axes (H₁, H₂, H₃), a horizontal axes pivoting device (40) is provided, which horizontal axes pivoting device (40) is movably connected, by means of a horizontal axes coupling device (60), to at least two supporting elements (100, 200, 300), each of which can be pivoted about their horizontal axes (H₁, H₂, H₃), and wherein
for purposes of pivoting the supporting elements (100, 200, 300) about their vertical axes (V₁, V₂, V₃), a vertical axes pivoting device (50) is provided, which vertical axes pivoting device (50) is optionally coupled, by means of a vertical axes coupling device (70), mounted such that it can rotate about a coupling device vertical axis (VK), with respect to the housing (10), with at least two supporting elements (100, 200, 300), each of which can pivot about their vertical axes (V₁, V₂, V₃),
**characterised in that**,
the supporting elements (100, 200, 300) are arranged in at least two headlamp planes (E₁, E₂, E₃), spaced apart from one another in the vertical direction (D_{1V}, D_{2V}, D_{3V}), wherein
the horizontal axes coupling device (60) is movably connected to at least two supporting elements (100, 200, 300), and is mounted such that it can rotate about a coupling device horizontal axis (H_{K}) with respect to the housing (10).

2. Vehicle headlamp (1) according to Claim 1,
**characterised in that**,
the horizontal axes coupling device (60) is directly movably connected to at least two supporting elements (200, 300), which are arranged in at least two headlamp planes (E₂, E₃), spaced apart from one another in the vertical direction (D_{2V}, D_{3V}).

3. Vehicle headlamp (1) according to Claim 1 or 2,
**characterised in that**,
the horizontal axes coupling device (60) is directly movably connected to at least two supporting elements (200, 300), and is indirectly connected to at least one further supporting element (100) by means of a coupling element (63).

4. Vehicle headlamp (1) according to one of the Claims 1 to 3,
**characterised in that**,
at least three optically-relevant structural units (110, 210, 310) are provided, wherein
at least two optically-relevant structural units (110, 210) with their supporting elements (100, 200) are arranged next to one another in a first headlamp plane (E₁), and at least one further optically-relevant structural unit (310) with its supporting element (300) is arranged in a further headlamp plane (E₃) spaced apart in the vertical direction (D_{3V}) from the first headlamp plane (E₁).

5. Vehicle headlamp (1) according to one of the Claims 1 to 4,
**characterised in that**,
each supporting element (100, 200, 300) is in each case mounted in the housing (10) with three mounting points (101, 102, 103; 201, 202, 203; 301, 302, 303), wherein
a first horizontal mounting point (101, 201, 301) and a second fixed mounting point (102, 202, 302) respectively form mounting arrangements about the respective horizontal axis (H₁, H₂, H₃), and the second fixed mounting point (102, 202, 302) and a third vertical mounting point (103, 203, 303) respectively form mounting arrangements about the respective vertical axis (V₁, V₂, V₃) of the supporting elements (100, 200, 300).

6. Vehicle headlamp (1) according to Claim 5,
**characterised in that**,
the second fixed mounting point (102, 202, 302) of each supporting element (100, 200, 300) is in each case fixed in position with respect to the housing (10) .

7. Vehicle headlamp (1) according to one of the Claims 1 to 6,
**characterised in that**,
the horizontal axes pivoting device (40) preferably engages directly with the horizontal axes coupling device (60).

8. Vehicle headlamp (1) according to one of the Claims 1 to 7,
**characterised in that**,
the vertical axes pivoting device (50) preferably engages directly with the vertical axes coupling device (70).

9. Vehicle headlamp (1) according to one of the Claims 1 to 8,
**characterised in that**,
the vertical axes pivoting device (50) is coupled, by means of a vertical axes coupling device (70), which is mounted such that it can rotate about a coupling device vertical axis (V_{K}) with respect to the housing (10), with at least two supporting elements (100, 200, 300), which in each case can pivot about their vertical axes (V₁, V₂, V₃), and the vertical axis coupling device (70), which is mounted such that it can rotate about the coupling device vertical axis (V_{K}), preferably engages directly with all pivotable supporting elements (100, 200, 300).

10. Vehicle headlamp (1) according to one of the Claims 1 to 9,
**characterised in that**,
the vertical axes coupling device (70) connects the supporting elements (100, 200, 300) directly with one another.

11. Vehicle headlamp (1) according to one of the Claims 5 to 10,
**characterised in that**,
the vertical axes coupling device (70) is preferably connected in an articulated manner to the pivotable supporting elements (100, 200, 300), in each case at their horizontal mounting points (101, 201, 301).

12. Vehicle headlamp (1) according to one of the Claims 1 to 11,
**characterised in that**,
the horizontal axes coupling device (60) connects at least two supporting frames (200, 300) directly to one another.

13. Vehicle headlamp (1) according to one of the Claims 1 to 12,
**characterised in that**,
the horizontal axes coupling device (60) is movably connected, directly and/or indirectly, to all supporting elements (100, 200, 300).

14. Vehicle headlamp (1) according to one of the Claims 5 to 13,
**characterised in that**,
the horizontal axes coupling device (60) is preferably connected in an articulated manner to the pivotable supporting elements (100, 200, 300), in each case at their vertical mounting points (103, 203, 303).

15. Vehicle headlamp (1) according to one of the Claims 1 to 14,
**characterised in that**,
the coupling device horizontal axis (H_{K}) is arranged between two headlamp planes (E₁, E₂, E₃) spaced apart from one another in the vertical direction (D_{1V}, D_{2V}, D₃V).

16. Vehicle headlamp (1) according to one of the Claims 1 to 15,
**characterised in that**,
the coupling device horizontal axis (H_{K}) is arranged essentially at the centre of the horizontal axes coupling device (60).

17. Vehicle headlamp (1) according to one of the Claims 1 to 16,
**characterised in that**,
the vertical axes pivoting device (50) is coupled by means of a vertical axes coupling device (70), which is mounted such that it can rotate about a coupling device vertical axis (V_{K}) with respect to the housing (10), with at least two supporting elements (100, 200, 300), which in each case can pivot about their vertical axes (V₁, V₂, V₃), and the coupling device vertical axis (V_{K}) is arranged essentially at the centre of the vertical axes coupling device (70).

18. Vehicle headlamp (1) according to one of the Claims 1 to 17,
**characterised in that**,
with the horizontal axes coupling device (60), all supporting elements (100, 200, 300) can in each case be pivoted synchronously about their horizontal axes (H₁, H₂, H₃).

19. Vehicle headlamp (1) according to one of the Claims 1 to 18,
**characterised in that**,
with the vertical axes coupling device (70), all supporting elements (100, 200, 300) can in each case be pivoted synchronously about their vertical axes (V₁, V₂, V₃).

20. Vehicle headlamp (1) according to one of the Claims 1 to 19,
**characterised in that**,
the horizontal axes coupling device (60) and/or the vertical axes coupling device (70) is/are designed as a one-piece coupling element (60, 70).

21. Vehicle, comprising at least one vehicle headlamp (1) according to one of the Claims 1 to 20.

## Revendications

1. Phare de véhicule automobile (1) comportant un logement (10) ainsi qu'au moins deux composants optiques significatifs (110,210,310), par exemple des unités de module lumineux (110,210,310), dans lequel chaque composant optique significatif (110,210,310) est fixé dans un élément porteur propre (100,200,300) et chaque élément porteur (100,200,300) est positionné de manière basculante par rapport au logement (10) respectivement autour d'un axe horizontal (H₁, H₂, H₃) ainsi que respectivement un axe vertical (V₁, V₂, V₃), dans lequel afin de basculer les éléments porteurs (100,200,300) autour de leurs axes horizontaux (H₁,H₂,H₃) un dispositif de basculement d'axes horizontaux (40) est prévu, lequel dispositif de basculement d'axes horizontaux (40) est relié de manière mobile au moyen d'un dispositif de couplage d'axes horizontaux (60) avec au moins deux éléments porteurs (100,200,300) pouvant être basculés respectivement autour de leurs axes horizontaux (H₁, H₂, H₃), et dans lequel afin de basculer les éléments porteurs (100,200,300) autour de leurs axes verticaux (V₁, V₂, V₃) un dispositif de basculement d'axes verticaux (50) est prévu, lequel dispositif de basculement d'axes verticaux (50) est couplé le cas échéant au moyen d'un dispositif de couplage d'axes verticaux (70) positionné rotativement autour d'un axe vertical de dispositif de couplage (VK) par rapport au logement (10) avec au moins deux éléments porteurs (100,200,300) pouvant être basculés respectivement autour de leurs axes verticaux (V₁, V₂, V₃), **caractérisé en ce que** les éléments porteurs (100,200,300) sont disposés au moins dans deux plans de phare (E₁, E₂, E₃) espacés l'un de l'autre dans la direction verticale (D_{1V}, D_{2V}, D_{3V}), dans lequel le dispositif de couplage d'axes horizontaux (60) est reliée de manière mobile avec au moins deux éléments porteurs (100,200,300) et est positionné rotativement autour d'un axe horizontal de dispositif de couplage (HK) par rapport au logement (10) .

2. Phare de véhicule automobile (1) selon la revendication 1, **caractérisé en ce que** le dispositif de couplage d'axes horizontaux (60) est relié directement de manière mobile avec au moins deux éléments porteurs (200,300), disposés au moins un dans deux plans de phare (E₂, E₃) et espacés l'un de l'autre dans la direction verticale (D_{2V}, D_{3V}).

3. Phare de véhicule automobile (1) selon la revendication 1 ou 2, **caractérisé en ce que** le dispositif de couplage d'axes horizontaux (60) est relié directement de manière mobile avec au moins deux éléments porteurs (200,300) et est relié indirectement avec au moins un élément porteur supplémentaire (100) au moyen d'un élément de couplage (63).

4. Phare de véhicule automobile (1) selon une des revendications 1 à 3, **caractérisé en ce que** au moins trois composants optiques significatifs (110, 210, 310) sont prévus, dans lequel au moins deux composants optiques significatifs (110, 210) disposés avec leurs éléments porteurs (100, 200) l'un à côté de l'autre dans un premier plan de phare (E₁) et au moins un composant optique significatif supplémentaire (310) avec son élément porteur (300) est disposé et dans un plan de phare supplémentaire (E₃) espacé dans la direction verticale (D_{3V}) du premier plan de phare (E₁).

5. Phare de véhicule automobile (1) selon une des revendications 1 à 4, **caractérisé en ce que** chaque élément porteur (100,200,300) est positionné respectivement avec trois points d'appui (101,102,103 ;201,202,203 ; 301, 302, 303) dans le logement (10), dans lequel un premier point d'appui horizontal (101, 201, 301) et un deuxième points d'appui de fixation (102, 202, 302) forment respectivement des paliers autour de l'axe horizontal respectif (H₁,H₂,H₃) et le deuxième point d'appui de fixation (102, 202, 302) et le troisième point d'appui vertical (103, 203, 303) forment respectivement des paliers autour de l'axe vertical respectif (V₁, V₂, V₃) des éléments porteurs (100,200,300) .

6. Phare de véhicule automobile (1) selon la revendication 5, **caractérisé en ce que** le deuxième point d'appui de fixation (102, 202, 302) de chaque élément porteur (100,200,300) est respectivement stationnaire par rapport au logement (10).

7. Phare de véhicule automobile (1) selon une des revendications 1 à 6, **caractérisé en ce que** le dispositif de basculement d'axes horizontaux (40) intervient directement de préférence sur le dispositif de couplage d'axes horizontaux (60).

8. Phare de véhicule automobile (1) selon une des revendications 1 à 7, **caractérisé en ce que** le dispositif de basculement d'axes verticaux (50) intervient directement de référence sur le dispositif de couplage d'axes verticaux (60).

9. Phare de véhicule automobile (1) selon une des revendications 1 à 8, **caractérisé en ce que** le dispositif de basculement d'axes verticaux (50) est couplé au moyen d'un dispositif de couplage d'axes verticaux (70) positionné rotativement autour d'un axe vertical de dispositif de couplage (V_{K}) par rapport au logement (10) avec au moins deux éléments porteurs (100,200,300) pouvant être basculés autour de leurs axes verticaux (V₁, V₂, V₃) et le dispositif de couplage d'axe verticaux (70) positionné rotativement autour de l'axe vertical (V_{K}) du dispositif de couplage intervient de préférence directement sur tous les éléments porteurs basculants (100, 200, 300).

10. Phare de véhicule automobile (1) selon une des revendications 1 à 9, **caractérisé en ce que** le dispositif de couplage d'axes verticaux (70) relie les éléments porteurs (100,200,300) directement les uns aux autres.

11. Phare de véhicule automobile (1) selon une des revendications 5 à 10, **caractérisé en ce que** le dispositif de couplage d'axes verticaux (70) est relié de préférence de manière articulée avec des éléments porteurs basculants (100,200,300) respectivement dans leurs points d'appuis horizontaux (101, 201, 301).

12. Phare de véhicule automobile (1) selon une des revendications 1 à 11, **caractérisé en ce que** le dispositif de couplage d'axes horizontaux (60) relie directement l'un à l'autre au moins deux cadres porteurs (200,300).

13. Phare de véhicule automobile (1) selon une des revendications 1 à 12, **caractérisé en ce que** le dispositif de couplage d'axes horizontaux (60) est relié directement et/ou indirectement de manière mobile avec tous les éléments porteurs (100, 200, 300).

14. Phare de véhicule automobile (1) selon une des revendications 5 à 13, **caractérisé en ce que** le dispositif de couplage d'axes horizontaux (60) est relié de préférence de manière articulée avec les éléments porteurs basculants (100, 200, 300) respectivement dans leurs points d'appuis verticaux (103, 203, 303) .

15. Phare de véhicule automobile (1) selon une des revendications 1 à 14, **caractérisé en ce que** l'axe horizontal de dispositif de couplage (H_{K}) est disposé entre le deux plans de phare (E₁, E₂, R₃) espacés l'un de l'autre dans la direction verticale (D_{1V}, D_{2V}, D_{3V}).

16. Phare de véhicule automobile (1) selon une des revendications 1 à 15, **caractérisé en ce que** l'axe horizontal de dispositif de couplage (H_{K}) est disposé essentiellement au centre du dispositif de couplage d'axes horizontaux (60).

17. Phare de véhicule automobile (1) selon une des revendications 1 à 16, **caractérisé en ce que** le dispositif de basculement d'axes verticaux (50) est couplé au moyen d'un dispositif de couplage d'axes verticaux (70) positionné rotativement autour d'un axe vertical de dispositif de couplage (V_{K}) par rapport au logement (10) avec au moins deux éléments porteurs (100, 200, 300) pouvant être basculés respectivement dans leurs axes verticaux (V₁, V₂, V₃), et l'axe vertical de dispositif de couplage (V_{K}) et est disposé essentiellement au centre du dispositif de couplage d'axes verticaux (70).

18. Phare de véhicule automobile (1) selon une des revendications 1 à 17, **caractérisé en ce que** avec le dispositif de couplage d'axes horizontaux (60) tous les éléments porteurs (100,200,300) peuvent être basculés de manière synchrone respectivement autour de leurs axes horizontaux (H₁, H₂, H₃).

19. Phare de véhicule automobile (1) selon une des revendications 1 à 18, **caractérisé en ce que** avec le dispositif de couplage d'axes verticaux (70) tous les éléments porteurs (100,200,300) peuvent être basculés de manière synchrone respectivement autour de leurs axes verticaux (V₁, V₂, V₃).

20. Phare de véhicule automobile (1) selon une des revendications 1 à 19, **caractérisé en ce que** le dispositif de couplage d'axes horizontaux (60) et/ou le dispositif de couplage d'axes verticaux (70) est, respectivement sont configurés comme un élément de couplage en un seul tenant (60,70).

21. Véhicule automobile, comprenant au moins un phare de véhicule (1) selon une des revendications 1 à 20.
